# EUROPEAN PATENT APPLICATION

(11) **EP 4 845 024 A1**
(43) Date of publication of application: **25.11.2026**
(21) Application number: 26180483.5
(22) Date of filing: 22.05.2026
(51) Int. Cl.: H02S 40/34, H02S 20/23, H02S 20/24, H02S 30/00, H02S 40/36

(54) **INTERLOCK FOR ROOFING PANEL ASSEMBLY**

(30) Priority: 22.05.2025 US 202519216326
(71) Applicant: Tesla, Inc., Austin, TX 78725 (US)
(72) Inventor: RASMUSSEN, Bryce, Austin, Texas, 78725 (US)
(74) Representative: Liesegang, Eva

(57) **Abstract**

A solar panel interlock assembly includes a main body including a wall, a first engagement feature extending away from the wall and configured to engage with a first solar panel, and a second engagement feature extending away from the wall and configured to engage with a second solar panel, and a bonding strip supported by the main body and electrically couple with the first solar panel and the second solar panel to electrically couple the first solar panel with the second solar panel. The solar panel interlock assembly is configured to mechanically and electrically couple with the first solar panel and the second solar panel without use of an external tool.

## Description

### TECHNICAL FIELD

This application relates generally to an interlock for a roofing panel assembly.

### BACKGROUND

Solar panels are installed on roofs to generate electrical energy in response to exposure to sunlight, such that the solar panels act as a source of electrical energy. Maintaining consistent spacing and electrical grounding between solar panels may be challenging and lead to inefficiencies and potential hazards.

### SUMMARY

Embodiments for a solar panel interlock assembly are described herein. The solar panel interlock assembly may include a main body including a wall, a first engagement feature extending away from the wall and configured to engage with a first solar panel, and a second engagement feature extending away from the wall and configured to engage with a second solar panel, and a bonding strip supported by the main body and electrically couple with the first solar panel and the second solar panel to electrically couple the first solar panel with the second solar panel. The solar panel interlock assembly is configured to mechanically and electrically couple with the first solar panel and the second solar panel without use of an external tool.

In some embodiments, the bonding strip is manufactured from stainless steel.

In some embodiments, the main body defines a first support surface supporting a first portion of the bonding strip, a second support surface supporting a second portion of the bonding strip, and a slot to receive a third portion of the bonding strip extending between the first portion and the second portion.

In some embodiments, the bonding strip includes a first tooth configured to engage with the first solar panel and a second tooth configured to engage with the second solar panel. The first tooth is electrically coupled with the second tooth such that when the first tooth is engaged with the first solar panel and the second tooth is engaged with the second solar panel, the first solar panel is electrically coupled with the second solar panel.

In some embodiments, the first tooth is configured to pierce a first anodized surface of the first solar panel to engage with the first solar panel and the second tooth is configured to pierce a second anodized surface of the second solar panel to engage with the second solar panel.

In some embodiments, the bonding strip includes a third tooth configured to engage with the first solar panel and a fourth tooth configured to engage with the second solar panel. The first tooth, the second tooth, the third tooth, and the fourth tooth are electrically coupled with each other such that when (i) at least one of the first tooth or the third tooth is engaged with the first solar panel and (ii) at least one of the second tooth or the fourth tooth is engaged with the second solar panel, the first solar panel is electrically coupled with the second solar panel.

In some embodiments, the bonding strip includes a cross-member, a first biasing member coupled between the first tooth and the cross-member, the first biasing member configured to bias the first tooth in a direction towards the first solar panel to facilitate engagement between the first tooth and the first solar panel, and a second biasing member coupled between the second tooth and the cross-member, the second biasing member configured to bias the second tooth in a direction towards the second solar panel to facilitate engagement between the second tooth and the second solar panel.

In some embodiments, the bonding strip includes a first wing extending from a first end of the cross-member and a second wing extending from a second end of the cross-member, and the main body includes a first opening and a second opening configured to receive the first wing and the second wing, respectively, to couple the bonding strip with the main body.

In some embodiments, the first engagement feature includes a first cutout configured to receive the first biasing member and a second cutout configured to receive the second biasing member.

In some embodiments, at least a portion of the bonding strip is configured to elastically deform to couple with the first solar panel and the second solar panel.

In some embodiments, the first engagement feature is configured to be received in a first slot of the first solar panel, and the second engagement feature is configured to be received in a second slot of the second solar panel.

In some embodiments, the main body includes a spacer extending away from the wall and configured to be positioned between the first solar panel and the second solar panel to define a gap therebetween.

In some embodiments, the spacer is removable from the main body.

In some embodiments, the spacer is a first spacer extending in a first direction away from the wall, and the main body includes a second spacer extending in a second direction opposite the first direction away from the wall and configured to be positioned between a third solar panel and a fourth solar panel to define a gap therebetween.

In some embodiments, the wall provides an indication of a gap to space the first solar panel from the second solar panel.

At least one embodiment relates to an interlock assembly. The interlock assembly includes a main body and a bonding strip. The main body includes a wall, a first engagement feature extending away from the wall and configured to couple with a first roofing panel, and a second engagement feature extending away from the wall and configured to couple with a second roofing panel. The bonding strip is configured to be supported by the main body and includes at least one first tooth configured to engage with the first roofing panel and at least one second tooth configured to engage with the second roofing panel. The at least one first tooth and the at least one second tooth are electrically coupled with each other such that when the at least one first tooth is engaged with the first roofing panel and the at least one second tooth is engaged with the second roofing panel, the first roofing panel is electrically coupled with the second roofing panel. The main body facilitates engaging the bonding strip with the first roofing panel and the second roofing panel without an external tool.

In some embodiments, the bonding strip includes a cross-member, a first biasing member coupled between the at least one first tooth and the cross-member, the first biasing member configured to bias the at least one first tooth in a direction towards the first roofing panel to facilitate engagement between the at least one first tooth and the first roofing panel, and a second biasing member coupled between the at least one second tooth and the cross-member, the second biasing member configured to bias the at least one second tooth in a direction towards the second roofing panel to facilitate engagement between the at least one second tooth and the second roofing panel. The main body defines a first support surface supporting the first biasing member, a second support surface supporting the second biasing member, and a slot to receive the cross-member extending between the first biasing member and the second biasing member.

In some embodiments, the bonding strip includes two first teeth and two second teeth.

At least one embodiment relates to a roofing assembly. The roofing assembly includes a first roofing panel configured to couple with a roof, the first roofing panel defining a first slot, a second roofing panel configured to couple with the roof, the second roofing panel defining a second slot, and an interlock assembly. The interlock assembly includes a main body and a bonding strip. The main body includes a wall, a first engagement feature extending from the wall and configured to be received in the first slot to couple to the first roofing panel, a second engagement feature extending from the wall and configured to be received in the second slot to couple to the second roofing panel, and a spacer extending from the wall and configured to be positioned between the first roofing panel and the second roofing panel to define a gap therebetween. The bonding strip is configured to be supported by the main body and electrically couple the first roofing panel with the second roofing panel.

In some embodiments, the first roofing panel includes a first anodized surface and the second roofing panel includes a second anodized surface. In such embodiments, the bonding strip includes at least one first tooth configured to engage with the first roofing panel and at least one second tooth configured to engage with the second roofing panel, the at least one first tooth and the at least one second tooth are electrically coupled with each other. In such embodiments, the at least one first tooth is configured to pierce the first anodized surface and the at least one second tooth is configured to pierce the second anodized surface to engage with the first roofing panel and the second roofing panel, respectively, and electrically couple the first roofing panel with the second roofing panel.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE FIGURES

FIG. 1 is a perspective view of a mounting system including an interlock to couple solar panels to a roof, according to an embodiment.
FIG. 2 is a perspective view of the mounting system of FIG. 1 coupling rails to the roof, according to an embodiment.
FIG. 3 is a perspective view of the interlock of FIG. 1 including a body and a bonding strip, according to an embodiment.
FIG. 4 is a perspective view of the body of FIG. 3, according to an embodiment.
FIG. 5 is a top view of the body of FIG. 3, according to an embodiment.
FIG. 6 is a bottom view of the body of FIG. 3, according to an embodiment.
FIG. 7 is a top view of the body of FIG. 3 with a spacer removed, according to an embodiment.
FIG. 8 is a front view of the body of FIG. 3, according to an embodiment.
FIG. 9 is a side view of the body of FIG. 3, according to an embodiment.
FIG. 10 is a section view of the body of FIG. 3, according to an embodiment.
FIG. 11 is a section view of the body of FIG. 8, according to an embodiment.
FIG. 12 is a detailed, section view of the body of FIG. 11, according to an embodiment.
FIG. 13 is perspective view of the bonding strip of FIG. 3, according to an embodiment.
FIG. 14 is a broken top view of the bonding strip of FIG. 3, according to an embodiment.
FIG. 15 is a broken front view of the bonding strip of FIG. 3, according to an embodiment.
FIG. 16 is a side view of the bonding strip of FIG. 3, according to an embodiment.
FIG. 17 is a section view of the bonding strip of FIG. 15, according to an embodiment.
FIG. 18 is a front view of the bonding strip of FIG. 3, according to an embodiment.
FIG. 19 is a detailed view of the bonding strip of FIG. 18, according to an exemplary embodiment.
FIG. 20 is top view of the bonding strip of FIG. 3 prior to being bent, according to an embodiment.
FIG. 21 is a top view of multiple bonding strips of FIG. 3 after being cut from sheet metal, according to an embodiment.
FIG. 22 is a perspective view of the interlock of FIG. 1 being installed, according to an embodiment.
FIG. 23 is a side view of the interlock of FIG. 1 being installed, according to an embodiment.
FIG. 24 is a side view of the interlock of FIG. 1 installed and electrically coupled to a frame of a solar panel, according to an embodiment.
FIGS. 25 and 26 are perspective views of the interlock of FIG. 1 being installed, according to an embodiment.
FIGS. 27-30 are various perspective views of the interlock of FIG. 1 installed and electrically coupling adjacent solar panels, according to an embodiment.
FIG. 31 is a perspective view of the interlock of FIG. 1, according to another embodiment.
FIG. 32 is a top view of the interlock of FIG. 31 installed and electrically coupling adjacent solar panels, according to an embodiment.
FIG. 33 is an exploded perspective view of the interlock of FIG. 1, according to another embodiment.
FIG. 34 is a side view of the interlock of FIG. 33 installed and electrically coupled to a frame of a solar panel, according to an embodiment.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Referring generally to the figures, a solar panel mounting system is configured to support and secure solar panels to a roof. The mounting system includes an interlock including a main body and a bonding strip coupled together. The main body includes engagement features configured to be received within slots of adjacent solar panels and the bonding strip includes teeth configured to engage with the solar panels to electrically couple the solar panels through the bonding strip. The electrical connection through the bonding strip facilitates continuous grounding of the solar panels. The main body includes a spacer tab that helps maintain a consistent gap between the solar panels during installation. The spacer tab may be broken off from the main body when it is not needed (e.g., when coupling two rails together). The interlock may be installed to electrically couple adjacent solar panels without the need for an external tool.

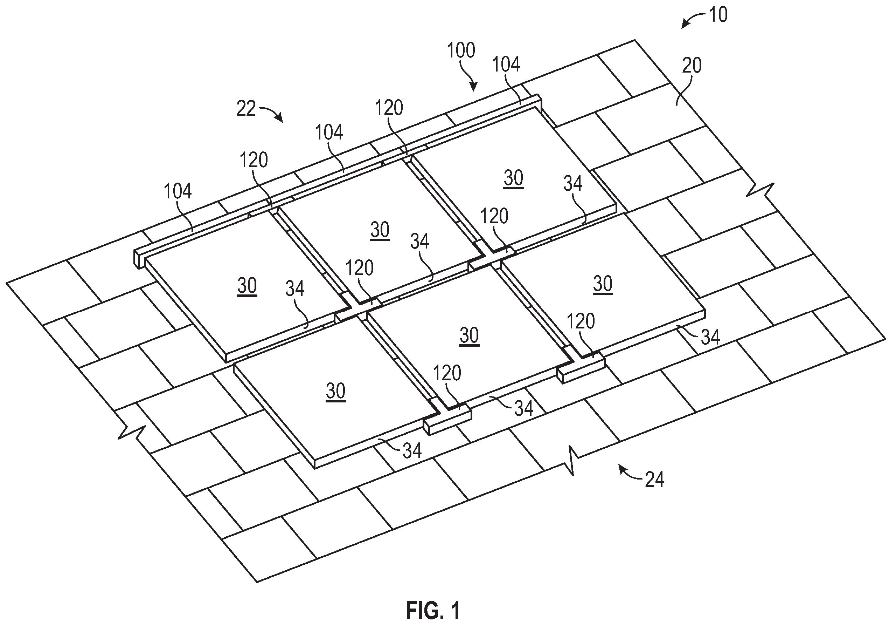

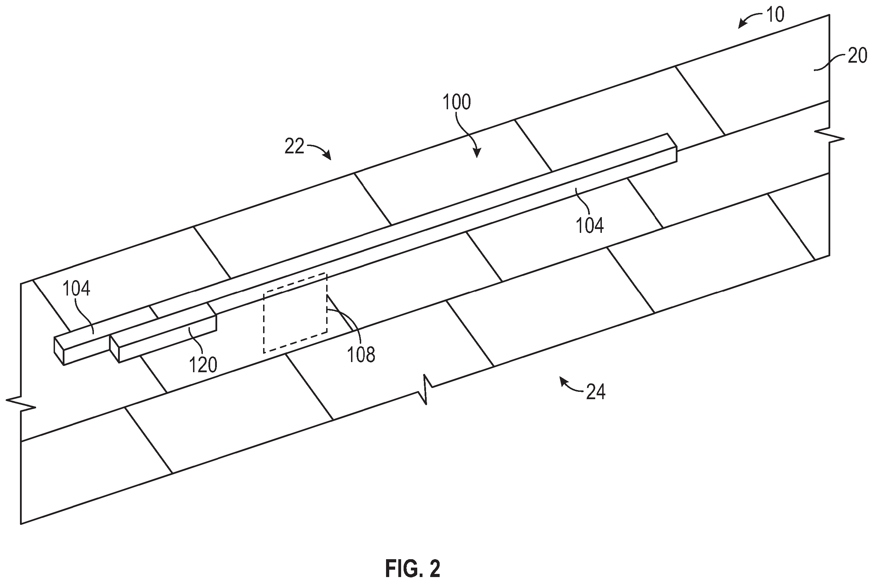

As shown in FIGS. 1 and 2, a solar-equipped structure or building system is shown as building 10, according to an exemplary embodiment. The building 10 may be a residential building (e.g., a single-family home, an apartment building, etc.), a commercial building (e.g., a shop, a storage unit, etc.), a garage, a shed, a barn, a gazebo, or another type of covered structure. The building 10 may cover or contain people and/or items (e.g., furniture, appliances, vehicles, machinery, etc.).

As shown in FIGS. 1 and 2, the building 10 includes a roof assembly, cover, or awning, shown as roof 20. The roof 20 may include a series of rafters (e.g., support beams, joists, etc.) supporting the other components of the roof 20, and decking (e.g., a series of panels, plywood panels, roof tiles, asphalt shingles, wood shingles, slate, composite, etc.). The decking extends along the top surfaces of the rafters and may be fixedly coupled to the rafters. The decking may cover a barrier or layer of underlayment that seals the roof 20 and prevents ingress of water through the roof 20. The rafters and the decking may be angled relative to a horizontal plane (e.g., inclined) to facilitate shedding water from the roof 20. Together, the rafters and the decking may form a support structure that supports other components of the building 10. As shown in FIGS. 1 and 2, the roof 20 defines a down-roof side (e.g., an exterior-facing edge side), shown as first side 22, and an up-roof side (e.g., an interior- or center-facing side), shown as second side 24.

As shown in FIG. 1, the building 10 includes a series of roofing panels (e.g., photovoltaic panels, photosensitive panels, etc.), shown as solar panels 30. The solar panels 30 each have a photovoltaic surface including a series of photovoltaic cells. The photovoltaic surface may face upward when the solar panels 30 are mounted to the roof 20, such that the photovoltaic surface is exposed to sunlight. The photovoltaic surface may generate electrical energy in response to exposure to the sunlight, such that the solar panels 30 act as a source of electrical energy. The solar panels 30 may provide the generated electrical energy to power an electrical load (e.g., an appliance, a battery charger, a power grid, a power storage system, etc.). Accordingly, the solar panels 30 may power electrical loads associated with (e.g., positioned in or around) the building 10. Each solar panel 30 further includes a series of rails, shown as solar panel frame 34, that extends around the photovoltaic surface. The solar panel frame 34 may provide mounting points that support the photovoltaic surface and facilitate coupling the solar panels 30 to the roof 20 and to adjacent solar panels 30. The building 10 may include more or fewer solar panels 30 based on the size of the building 10 and the energy demands of electrical loads.

As shown in FIGS. 1 and 2, the building 10 includes a solar panel mounting system (e.g., mounting frame, rail system, mounting system for the solar panels 30, etc.), shown as mounting system 100. The mounting system 100 may be installed on the roof 20 by one or more installation personnel (e.g., contractors, construction workers, etc.), referred to herein as an "installer." The mounting system 100 supports the solar panels 30 and fixedly couples the solar panels 30 to the roof 20. The mounting system 100 may be adjustable or scalable (e.g., by adding or removing components) to accommodate different numbers or sizes of the solar panels 30. By way of example, components may be added to mount additional solar panels 30, or components may be removed if a smaller number of solar panels 30 are desired. By way of another example, components may be spaced farther from one another to accommodate larger solar panels 30, or components may be spaced closer together to accommodate smaller solar panels 30.

As shown in FIGS. 1 and 2, the mounting system 100 includes a mounting rail (e.g., skirt, support member, bar, etc.), shown as rail 104, coupled to the roof 20 by a rail mount (e.g., roof coupler, solar panel coupler, etc.), shown as mount 108. The mount 108 may be fixedly coupled to the roof 20 at a first end and selectively coupled to the rail 104 at a second end. The rail 104 may extend along the roof 20 (e.g., parallel to a plane of the roof 20). The mounting system 100 may include multiple rails 104 supported by multiple mounts 108.

The mounting system 100 may include one or more mounting interfaces (e.g., solar panel interfaces, mounting brackets, etc.) coupled to the rail 104 and engaged with the solar panel frame 34 to couple the solar panels 30 to the mounting interfaces. Accordingly, the mounting interfaces couple the solar panels 30 to the rail 104. The mounting interfaces may be spaced along length of the rail 104. In some embodiments, the positions of the mounting interfaces along the length of the rail 104 are adjustable. This adjustability may facilitate adjusting the mounting system 100 to accommodate different positions of the mount 108 and the solar panels 30 without having to modify the rail 104.

As shown in FIGS. 1 and 2, the mounting system 100 includes a mounting interlock (e.g., tool-less interlock, interlock for the rails 104, interlock for the solar panels 30, solar panel spacing aid, etc.), shown as interlock 120, according to an exemplary embodiment. The interlock 120 may be configured to couple (i) adjacent rails 104 to each other and (ii) adjacent solar panels 30 to each other. By way of example, a first portion of the interlock 120 may be received within a slot of a first rail 104 and a second portion of the interlock 120 may be received within a slot of a second rail 104 to couple the first rail 104 with the second rail 104. By way of another example, and as discussed in greater detail below, a first portion of the interlock 120 may be received within the solar panel frame 34 of a first solar panel 30 and a second portion of the interlock 120 may be received within the solar panel frame 34 of a second solar panel 30 to couple the first solar panel 30 with the second solar panel 30.

According to an exemplary embodiment, a process for installing a series of solar panels 30 onto the roof 20 includes coupling one or more rails 104 (e.g., depending on the desired number of solar panels 30, the configuration of the roof 20, etc.) to the roof 20 using one or more of the mounts 108. Adjacent rails 104 may be coupled together using the interlock 120. As shown in FIG. 2, the rails 104 coupled to the roof 20 are positioned along (e.g., substantially parallel with) the first side 22 of the roof 20. As shown in FIG. 2, the interlock 120 is positioned along an up-roof side (e.g., a side opposite a street-facing side, a side opposite a down-roof side, a side facing the second side 24 of the roof 20, etc.) of the one or more rails 104 such that the interlock 120 is at least partially obstructed by the one or more rails 104. In other words, the one or more rails 104 may prevent the interlock 120 from being visible to an observer on the ground. After installing the rails 104, the solar panels 30 may be coupled to the rails 104 using the mounting interfaces. Adjacent solar panels 30 may be coupled together using another one of the interlocks 120. In some embodiments, a second set of rails 104 is coupled to the roof 20 along an up-roof side of the series of solar panels 30 to facilitate coupling a second series of solar panels 30 to the roof 20.

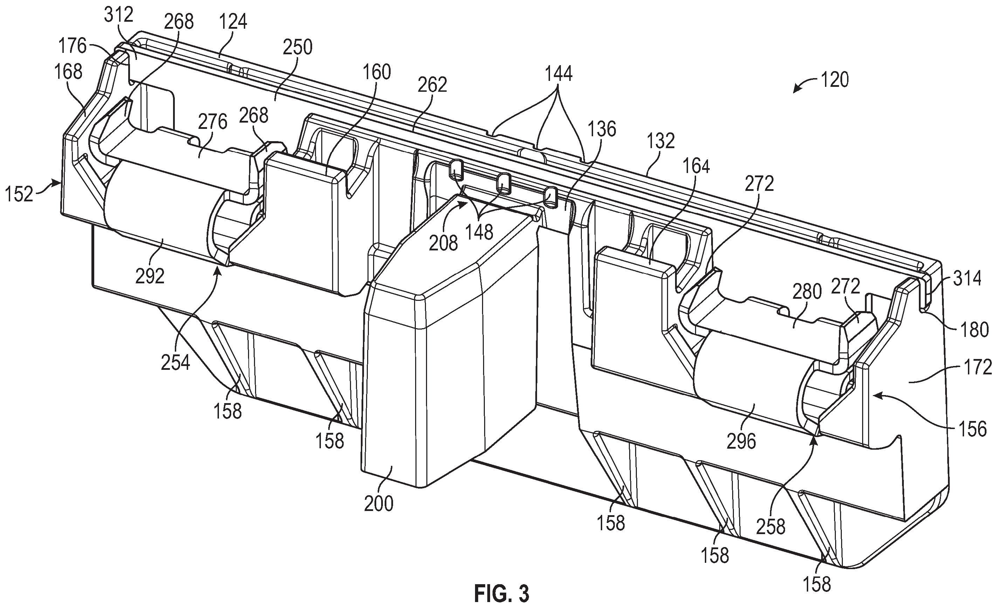

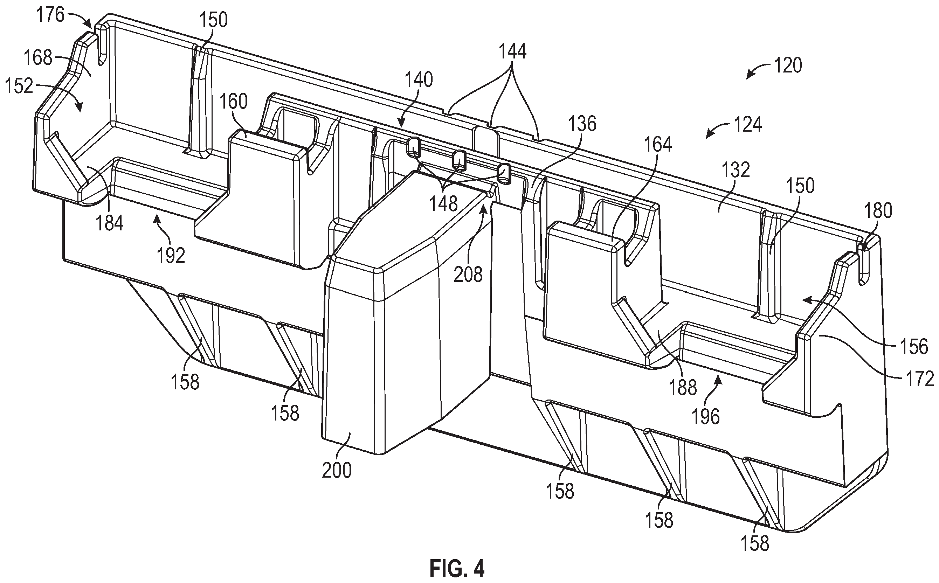

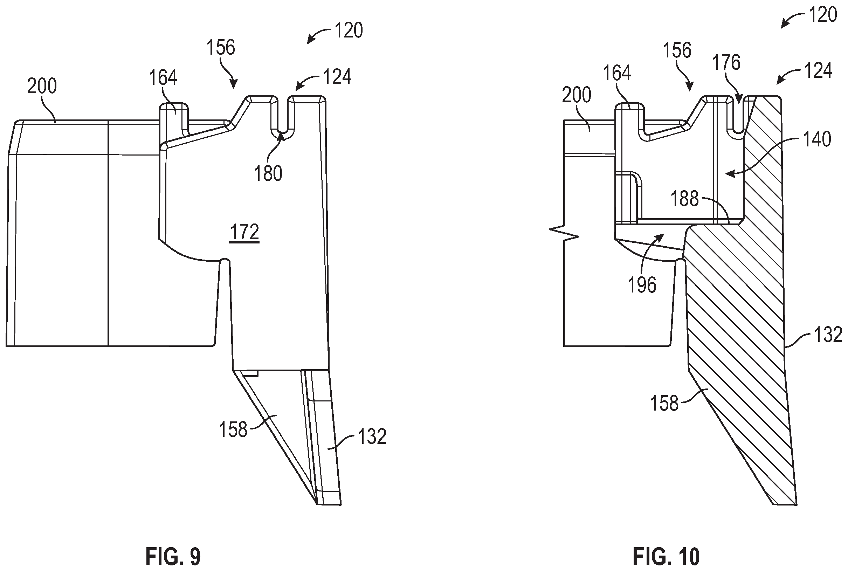

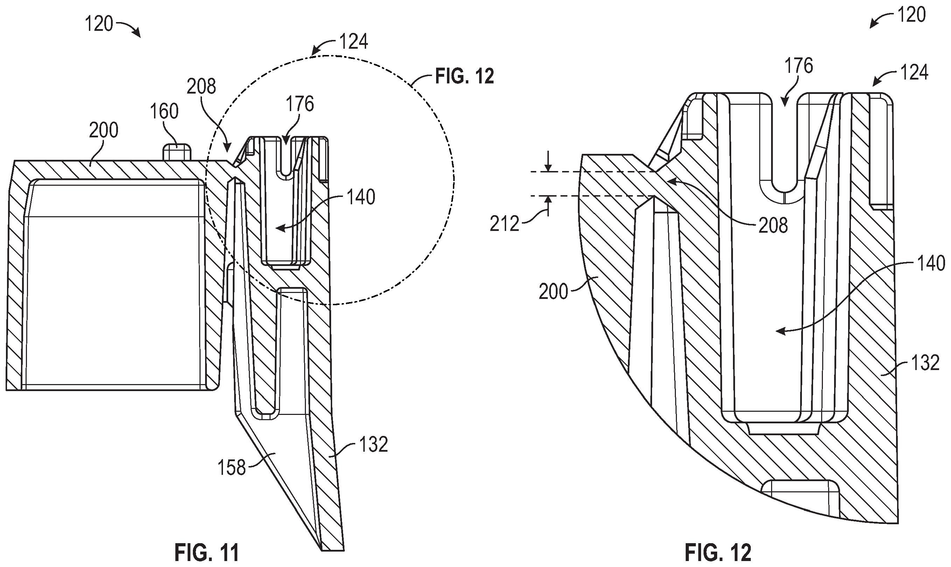

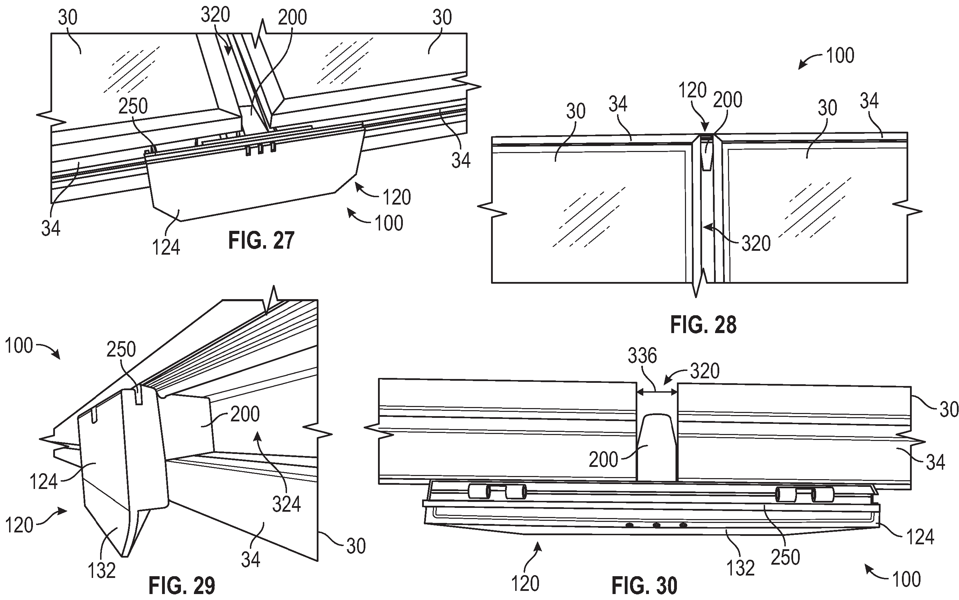

As shown in FIGS. 3-30, the interlock 120 includes a first component (e.g., main body, bonding strip support, etc.), shown as interlock body 124, and a second component (e.g., electrical contactor), shown as bonding strip 250, coupled to and supported by the interlock body 124. As shown in FIGS. 3-12, the interlock body 124 includes a rear wall (e.g., back side), shown as back panel 132, and a front wall (e.g., front side), shown as front panel 136, spaced from the back panel 132 to define at least a portion of a gap (e.g., opening), shown as bonding strip slot 140. The back panel 132 and the front panel 136 extend vertically and longitudinally and are substantially parallel with each other. The front panel 136 is substantially centered along a longitudinal length 142 of the interlock body 124. The back panel 132 extends along the longitudinal length 142 of the interlock body 124 and the front panel 136 extends along a portion of the longitudinal length 142 (e.g., the front panel 136 does not span the entirety of the longitudinal length 142 of the interlock body 124). In some embodiments, the longitudinal length 142 is about 110 millimeters ("mm"). In other embodiments, the longitudinal length 142 is greater than 110 mm (e.g., 120 mm, 130 mm, 150 mm, 200 mm, etc.), less then 110 mm (e.g., 100 mm, 90 mm, 80 mm, 50 mm, etc.), or otherwise suitably dimensioned. As shown in FIGS. 4 and 8-11, the back panel 132 extends vertically lower than the front panel 136. In some embodiments, the back panel 132 provides a space or handle for an installer to grip the interlock body 124 during installation of the interlock 120. In other words, the back panel 132 provides a point of contact for the installer to engage with to facilitate coupling the interlock 120 with the solar panels 30 or the rails 104.

As shown in FIGS. 3-5, 7, and 8, the back panel 132 includes three notches (e.g., markings, cutouts, etc.), shown as back panel indicators 144, along a top edge of the back panel 132. The back panel indicators 144 are configured to provide an indication (e.g., with or without the spacer 200) of where along the interlock body 124 the solar panels 30 or the rail 104 are to be positioned during installation thereof. A first, middle back panel indicator 144 of the back panel indicators 144 is substantially centered along the longitudinal length 142 of the interlock body 124. Accordingly, when the interlock 120 is installed to couple adjacent rails 104 together, the rails 104 may be positioned relative to interlock body 124 such that (i) the ends (e.g., the abutting ends) of the adjacent rails 104 are located at (e.g., proximate to) the first, middle back panel indicator 144 and (ii) the interlock 120 is substantially centered between the adjacent rails 104. As shown in FIGS. 3-5, 7, and 8, second and third back panel indicators 144 are positioned along opposing longitudinal sides (e.g., to the left and right) of the first, middle back panel indicator 144. The second and third back panel indicators 144 are longitudinally spaced apart from each other by a distance corresponding to a width of a gap (e.g., the width 336 of the gap 320) that spaces adjacent solar panels 30 from each other during installation thereof. Accordingly, when the interlock 120 is installed to couple adjacent solar panels 30 together, the solar panels 30 may be positioned relative to interlock body 124 such that (i) the solar panels 30 are spaced (e.g., longitudinally spaced) apart by the gap having the width indicated by the distance between the second and third back panel indicators 144 and (ii) the interlock 120 is substantially centered between the adjacent solar panels 30. In some embodiments, the back panel 132 includes more or fewer than three back panel indicators 144.

As shown in FIGS. 3-5, 7, and 8, the front panel 136 includes three notches (e.g., markings, cutouts, etc.), shown as front panel indicators 148, along a top edge of the front panel 136. Similar to the structure and function of the back panel indicators 144, the front panel indicators 148 are configured to provide an indication (e.g., with or without the spacer 200) of where along the interlock body 124 the solar panels 30 or the rail 104 are to be positioned during installation thereof. In some embodiments, the front panel 136 includes more or fewer than three front panel indicators 148. In some embodiments, the interlock body 124 does not include the back panel indicators 144 and/or the front panel indicators 148.

As shown in FIGS. 4, 5, 7, and 8, the back panel 132 includes a plurality of spacers (e.g., stand-offs, ribs, etc.), shown as bonding strip supports 150, positioned along the front side of the back panel 132 and extending away from the back panel 132. The strip supports 150 may be configured to engage a back surface of the bonding strip 250 when the bonding strip 250 is coupled with the interlock body 124. In some embodiments, the strip supports 150 support the bonding strip 250 to inhibit flexion or other deformation of the bonding strip 250 (e.g., during installation of the interlock 120). In some embodiments, the back panel 132 does not include the strip supports 150 such that the bonding strip 250 engages directly with the back panel 132.

As shown in FIGS. 3-10, the interlock body 124 includes a first bonding strip support and frame engagement structure, shown as first engagement feature 152, and a second bonding strip support and frame engagement structure, shown as second engagement feature 156. The first engagement feature 152 and the second engagement feature 156 extend in a direction away from the back panel 132 (e.g., in a direction away from the front side of the back panel 132). The first engagement feature 152 and the second engagement feature 156 are longitudinally spaced apart from each other with the front panel 136 positioned therebetween. As shown in FIGS. 3, 4, 6, and 8-11, the first engagement feature 152 and the second engagement feature 156 are supported along bottom surfaces thereof by supports, shown as ribs 158, extending from the back panel 132. The ribs 158 may improve the structural rigidity of the interlock body 124 to resist deformation during installation of the interlock 120. In some embodiments, the interlock body 124 does not include the ribs 158.

As shown in FIGS. 3-5, 8-11, and 22-24, the first engagement feature 152 includes a first member, shown as first protrusion 160, and the second engagement feature 156 includes a second member, shown as second protrusion 164. The first protrusion 160 and the second protrusion 164 extend upwards in a vertical direction from the first engagement feature 152 and the second engagement feature 156, respectively. In some embodiments, the first protrusion 160 and the second protrusion 164 are configured to engage with the solar panel frame 34 of the solar panels 30 to facilitate coupling the interlock 120 to the solar panels 30. By way of example, the first protrusion 160 may engage with the solar panel frame 34 (e.g., within a groove of the solar panel frame 34) of a first solar panel 30 and the second protrusion 164 may engage with the solar panel frame 34 (e.g., within a groove of the solar panel frame 34) of a second solar panel 30 adjacent to the first solar panel 30.

As shown in FIGS. 3-5, 8, and 9, the first engagement feature 152 includes a first wall, shown as first sidewall 168, and the second engagement feature 156 includes a second wall, shown as second sidewall 172. The first sidewall 168 is positioned at and extends away from a first longitudinal end of the back panel 132, and the second sidewall 172 is positioned at and extends away from a second longitudinal end of the back panel 132 opposite the first longitudinal end. The first sidewall 168 and the second sidewall 172 may serve as mechanical end stops (e.g., stop surfaces) to engage with the bonding strip 250 and inhibit longitudinal movement thereof.

As shown in FIGS. 3-5 and 9-12, the first sidewall 168 includes a first aperture (e.g., cutout), shown as first opening 176, and the second sidewall 172 includes a second aperture (e.g., cutout), shown as second opening 180. The first opening 176 and the second opening 180 may be configured to receive at least a portion of the bonding strip 250. As shown in FIGS. 3-5 and 9-12, the first opening 176 and the second opening 180 are positioned at the top edge of the first sidewall 168 and the second sidewall 172, respectively, such that the first opening 176 and the second opening 180 can receive the bonding strip 250 longitudinally or vertically.

As shown in FIGS. 4, 5, 8, and 10, the first engagement feature 152 includes a first bonding strip engagement surface, shown as first support surface 184, and the second engagement feature 156 includes a second bonding strip engagement surface, shown as second support surface 188. The first support surface 184 and the second support surface 188 extend within a horizontal plane substantially perpendicular to the first sidewall 168, the second sidewall 172, and the back panel 132. The first support surface 184 and the second support surface 188 are configured to engage with a bottom surface of the bonding strip 250 to support the bonding strip 250.

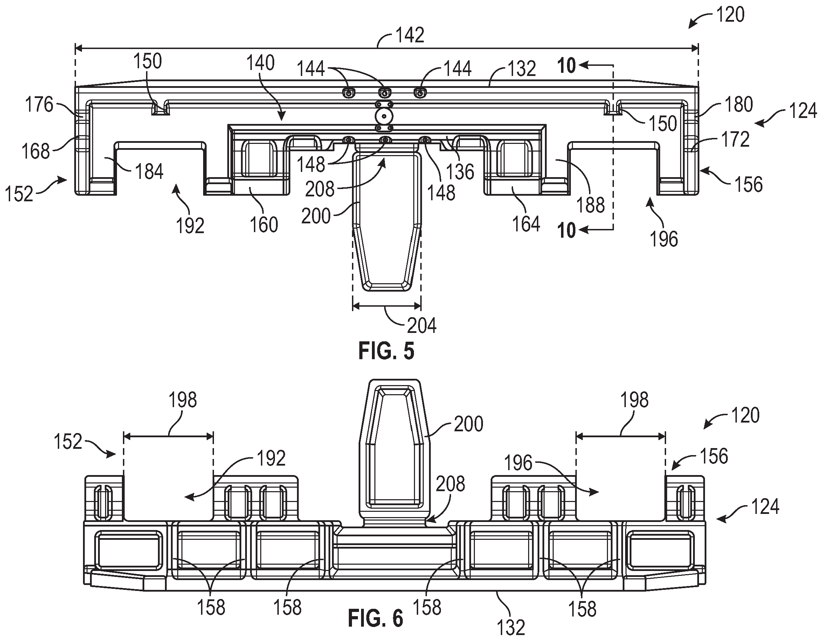

As shown in FIGS. 4-6, 8, and 10, the first engagement feature 152 includes a first aperture (e.g., opening, notch, etc.), shown as first cutout 192, and the second engagement feature 156 includes a second aperture (e.g., opening, notch, etc.), shown as second cutout 196. The first cutout 192 and the second cutout 196 open to a front side of the interlock body 124. The first cutout 192 and the second cutout 196 are configured such that the first support surface 184 and the second support surface 188 are U-shaped (e.g., shaped like the letter "U"). As shown in FIG. 6, the first cutout 192 and the second cutout 196 define a cutout length 198 extending in a longitudinal direction between the edges of the first support surface 184 and the second support surface 188 defining the first cutout 192 and the second cutout 196, respectively. In some embodiments, the cutout length 198 is about 15.8 mm. In other embodiments, the cutout length 198 is greater than 15.8 mm (e.g., 16 mm, 17 mm, 20 mm, etc.), less than 15.8 mm (e.g., 15 mm, 14 mm, 13 mm, etc.), or otherwise suitably dimensioned. As discussed in greater detail below, the first cutout 192 and the second cutout 196 are configured to receive at least a portion of the bonding strip 250. Accordingly, the cutout length 198 may be suitably dimensioned based on the dimensions of the portions of the bonding strip 250 received in the first cutout 192 and the second cutout 196.

As shown in FIGS. 3-6, 7-12, 22, and 25-30, the interlock body 124 includes a tab (e.g., spacer block), shown as spacer 200, coupled to the front panel 136 at a front side thereof and extending in a direction away from the front panel 136. As shown in FIG. 5, the spacer 200 has a longitudinal width 204 corresponding to the width of the gap between adjacent solar panels 30 installed on the roof 20. In some embodiments, the longitudinal width 204 is about 12.6 mm. In other embodiments, the longitudinal width 204 is greater than 12.6 mm (e.g., 13 mm, 14 mm, 15 mm, etc.) or less than 12.6 mm (e.g., 12 mm, 11 mm, 10 mm, etc.). In other embodiments, the spacer 200 is otherwise suitably dimensioned to define the width of the gap between adjacent solar panels 30 (e.g., to nominally and consistently space adjacent solar panels 30 at the same distance from each other).

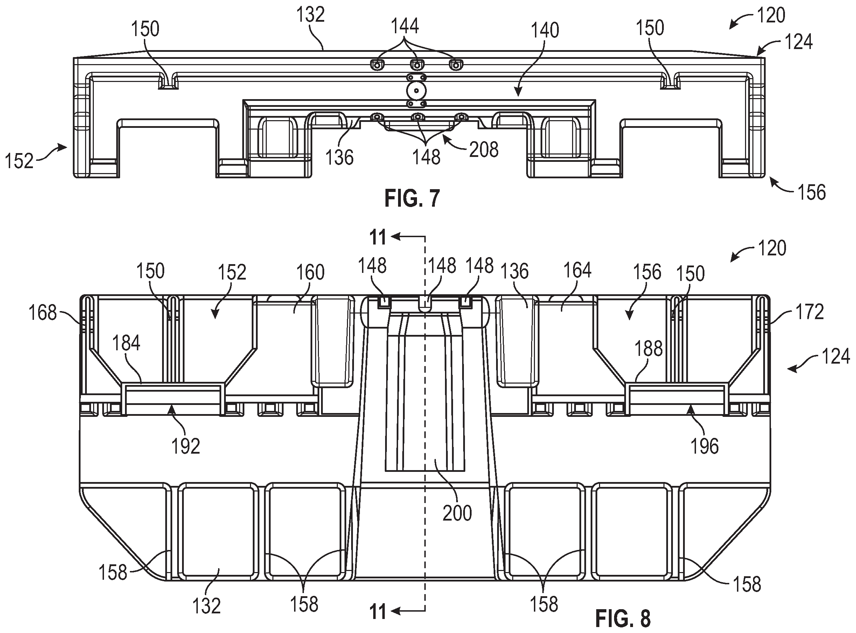

As shown in FIGS. 3-7, 11, and 12, the spacer 200 is coupled to the front panel 136 at a section of the spacer 200, shown breakaway section 208, defining a height, shown as thickness 212. The thickness 212 of the material at the breakaway section 208 is less than the thickness of the material surrounding the breakaway section 208, and the strength of the material at the breakaway section 208 is less than the strength of the surrounding material. Accordingly, the breakaway section 208 facilitates selectively removing (e.g., intentionally removing) the spacer 200 from the interlock body 124. By way of example, when a force is applied to the spacer 200 (e.g., in a vertical direction) to remove the spacer 200, the breakaway section 208 may yield (e.g., break, crack, etc.), thereby facilitating removing the spacer 200 without damaging the other parts of the interlock body 124. In some embodiments, the thickness 212 of the breakaway section 208 is about 1.1 mm. In other embodiments, the thickness 212 is greater than 1.1 mm (e.g., 1.2 mm, 1.5 mm, etc.), less than 1.1 mm (e.g., 1 mm, 0.9 mm, etc.), or otherwise suitably dimensioned to facilitate removing the spacer 200 from the interlock body 124. As shown in FIG. 7, the spacer 200 is removed from the interlock body 124. In some embodiments, the spacer 200 is removed from the interlock body 124 when the interlock 120 is used to couple components together where a gap therebetween is not needed. By way of example, as shown in FIG. 2, the spacer 200 may be removed from the interlock body 124 when the interlock 120 is used to couple adjacent rails 104 together because a gap between the adjacent rails 104 may not be needed.

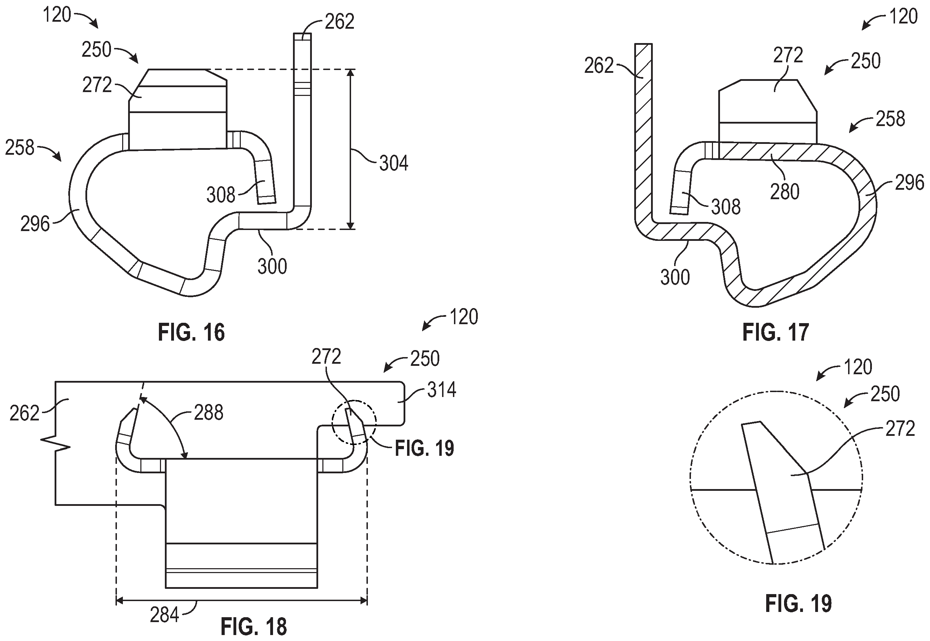

As shown in FIGS. 3 and 13-18, the bonding strip 250 includes a first portion, shown as first engagement member 254, a second portion, shown as second engagement member 258, and a third portion (e.g., cross-member), shown as back plate 262, extending longitudinally between the first engagement member 254 and the second engagement member 258. The first engagement member 254 includes a first pair of teeth (e.g., prongs, piercing members, a first tooth and a third tooth, etc.), shown as first teeth 268, and the second engagement member 258 includes a second pair of teeth (e.g., prongs, piercing members, a second tooth and a fourth tooth, etc.), shown as second teeth 272. The first teeth 268 are longitudinally spaced apart from each other by a section of the first engagement member 254, shown as first member 276, and the second teeth 272 are longitudinally spaced apart from each other by a section of the second engagement member 258, shown as second member 280. As shown in FIG. 18, the second teeth 272 are spaced apart by a distance 284 and are angled at an angle 288 relative to the second member 280 in a direction towards each other. In some embodiments, the distance 284 is about 23.1 mm and the angle 288 is about 78 degrees. In other embodiments, the distance 284 is greater or less than about 23.1 mm (e.g., 24 mm, 25 mm, 22 mm, 21 mm, etc.) and the angle 288 is greater or less than about 78 degrees (e.g., 80 degrees, 85 degrees, 90 degrees, 76 degrees, 75 degrees, etc.). Similarly, the first teeth 268 may be spaced apart by the distance 284 and may be angled relative to the first member 276 at the angle 288.

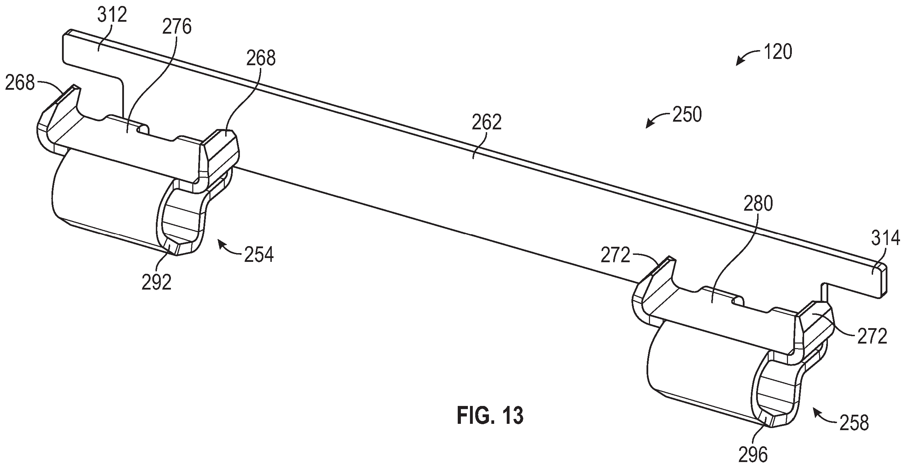

As shown in FIGS. 13-19, the first teeth 268 and the second teeth 272 extend vertically upwards and away from the first member 276 and the second member 280, respectively. As shown in FIGS. 13, 15, 18, and 19, the first teeth 268 and the second teeth 272 are tapered at ends thereof (e.g., at ends that are spaced from the first member 276 and the second member 280, free ends of the first teeth 268 and the second teeth 272). In some embodiments, the first teeth 268 and the second teeth 272 are sufficiently tapered or otherwise shaped (e.g., sharpened to a point) to pierce or sufficiently engage the solar panel frame 34 of the solar panels 30 when the interlock 120 is installed. In some embodiments, the first engagement member 254 includes more or fewer than two first teeth 268 and the second engagement member 258 includes more or fewer than two second teeth 272.

As shown in FIGS. 3 and 13-18, the first engagement member 254 includes a portion (e.g., spring portion), shown as first biasing member 292, and the second engagement member 258 includes a portion (e.g., spring portion), shown as second biasing member 296. The first biasing member 292 and the second biasing member 296 extend from the back plate 262 to the first member 276 and the second member 280, respectively, to couple the back plate 262 with the first engagement member 254 and the second engagement member 258. The first biasing member 292 and the second biasing member 296 follow a curved and generally U-shaped path between the back plate 262 and the first member 276 and the second member 280, respectively. Generally, the first biasing member 292 and the second biasing member 296 extend in a lateral direction away from the front side of the back plate 262, curve vertically downwards, then curve vertically upwards and laterally in a direction back towards the back plate 262 where the first biasing member 292 and the second biasing member 296 couple to the first member 276 and the second member 280, respectively. According to an exemplary embodiment, the first biasing member 292 and the second biasing member 296 are configured to engage with a portion of the solar panel frame 34 and elastically deform to bias the first teeth 268 and the second teeth 272 in a direction generally vertically upwards into an engagement with the solar panel frame 34 of the solar panels 30 when the interlock 120 is installed. The elastic deformation of the first biasing member 292 and the second biasing member 296 may facilitate retaining the coupling between the bonding strip 250 and the solar panel frame 34. In some embodiments, the first biasing member 292 and the second biasing member 296 are otherwise suitably shaped to bias the first teeth 268 and the second teeth 272 into an engagement with the solar panel frame 34 of the solar panels 30. As shown in FIGS. 16 and 17, the first biasing member 292 and the second biasing member 296 define a lower surface, shown as bottom surface 300. According to an exemplary embodiment, the bottom surface 300 engages with (i) the first support surface 184 and the second support surface 188 of the interlock body 124 when the bonding strip 250 is coupled with the interlock body 124 and (ii) the solar panel frame 34 when the interlock 120 is installed.

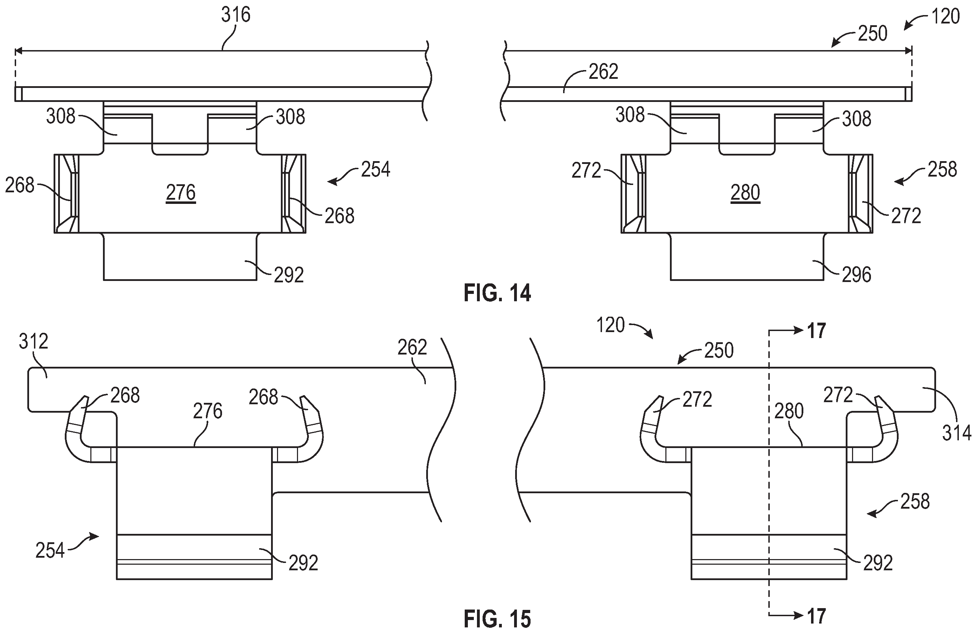

As shown in FIGS. 14, 16, and 17, the first engagement member 254 and the second engagement member 258 each include portions, shown as extension members 308, extending generally vertically downwards and away from the first member 276 and the second member 280, respectively. Free ends of the extension members 308 are vertically spaced from the first biasing member 292 and the second biasing member 296 such that, when the interlock 120 is not installed, the extension members 308 do not contact the first biasing member 292 and the second biasing member 296. In some embodiments, the extension members 308 contact the first biasing member 292 and the second biasing member 296 when the interlock 120 is installed to inhibit deflection of the first teeth 268 and the second teeth 272 away from the solar panel frame 34 during installation of the interlock 120 and an engagement between the solar panel frame 34 and the first and second teeth 268, 272. In some embodiments, the bonding strip 250 does not include the extension members 308.

As shown in FIGS. 3, 13, 15, and 18, the back plate 262 includes portions, shown as first wing 312 and second wing 314, extending from the longitudinal ends of the back plate 262. The first wing 312 and the second wing 314 extend from the back plate 262 along a top edge thereof. As shown in FIG. 3, the first wing 312 is received in the first opening 176 and the second wing 314 is received in the second opening 180 to couple the bonding strip 250 with the interlock body 124.

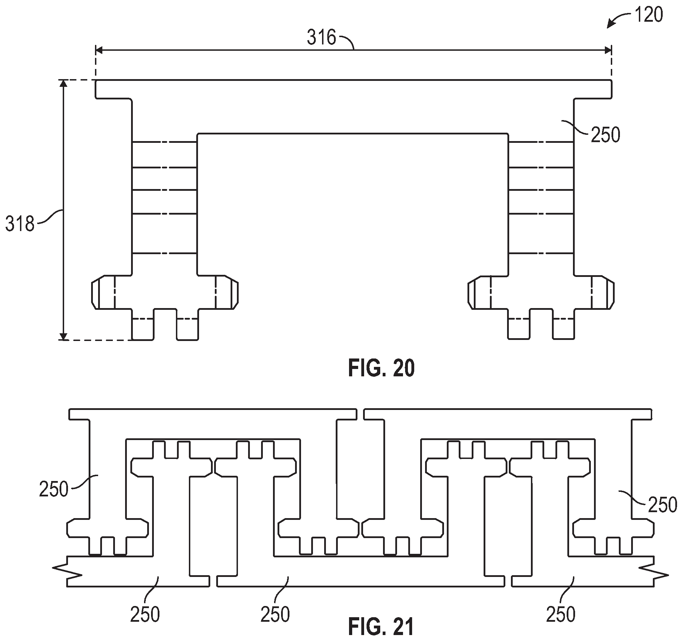

As shown in FIGS. 20 and 21, the bonding strip 250 is manufactured as a single, flat piece defining a length 316 and a width 318. In some embodiments, the length 316 is about 110 mm and the width 318 is about 55.3 mm. In other embodiments, the length 316 is greater or less than about 110 mm (e.g., 115 mm, 120 mm, 105 mm, 100 mm, etc.) and the width 318 is greater or less than about 55.3 mm (e.g., 60 mmm 65 mm, 50 mm, 45 mm, etc.). The bonding strip 250 may be manufactured from stainless steel sheet metal. In some embodiments, the bonding strip 250 is manufactured from another suitable material (e.g., aluminum, copper, brass, bronze, etc.) capable of electrically coupling adjacent solar panels 30 to each other when the interlock 120 is installed. In some embodiments, the bonding strip 250 is formed by a stamping process (e.g., die stamping) in which a die and a press pierce and press the sheet metal to form the bonding strip 250 (e.g., as a flat piece shown in FIGS. 20 and 21). In other embodiments, the bonding strip 250 is formed by a cutting process (e.g., laser cut, waterjet cut, etc.) in which the outline of the bonding strip 250 is cut from the sheet metal (e.g., as a flat piece shown in FIGS. 20 and 21). After being cut from the sheet metal, the flat bonding strip 250 may be bent at bend lines (shown in FIG. 20 by the solid-dot-solid lines) to form the various features of the first engagement member 254 and the second engagement member 258 (e.g., the first teeth 268, the second teeth 272, the first member 276, the second member 280, the first biasing member 292, the second biasing member 296, the extension members 308, etc.). In some embodiments, the bonding strip 250 is otherwise manufactured (e.g., molded, printed using additive manufacturing processes, etc.). According to an exemplary embodiment, because the bonding strip 250 is a single piece, the various features of the first engagement member 254 and the second engagement member 258 are electrically coupled together. In such an embodiment, the first teeth 268 are electrically coupled with the second teeth 272 such that when the first teeth 268 are engaged with a first solar panel 30 and the second teeth 272 are engaged with a second solar panel 30, the first solar panel 30 is electrically coupled with the second solar panel 30.

As shown in FIG. 3, the interlock body 124 and the bonding strip 250 are coupled with each other. The back plate 262 is received within the bonding strip slot 140, the first engagement member 254 is received within and supported by the first engagement feature 152, and the second engagement member 258 is received within and supported by the second engagement feature 156. At least a portion of the bottom surface 300 of the first engagement member 254 and the second engagement member 258 interfaces with the first support surface 184 and the second support surface 188, respectively. The first biasing member 292 and the second biasing member 296 extend vertically downwards relative to the first support surface 184 and the second support surface 188 such that at least a portion of the first biasing member 292 and the second biasing member 296 is received within the first cutout 192 and the second cutout 196, respectively. The first wing 312 is received in the first opening 176 and the second wing 314 is received in the second opening 180.

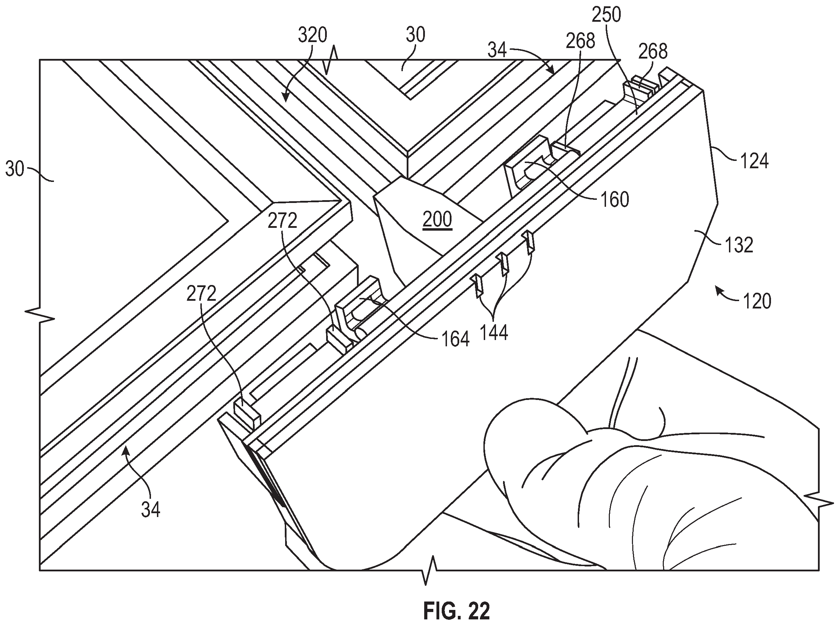

As shown in FIGS. 22-26, a process for installing the interlock 120 to couple adjacent solar panels 30 with each other is shown, according to an exemplary embodiment. As shown in FIG. 22, two solar panels 30 adjacent to each other are installed on the roof 20 and spaced apart from each other to define a space, shown as gap 320, therebetween. The installer may position the interlock 120 relative to a first one of the solar panels 30 such that the spacer 200 is positioned within the gap 320 and engaged with the first solar panel 30 (e.g., engaged with the solar panel frame 34 along a longitudinal side thereof).

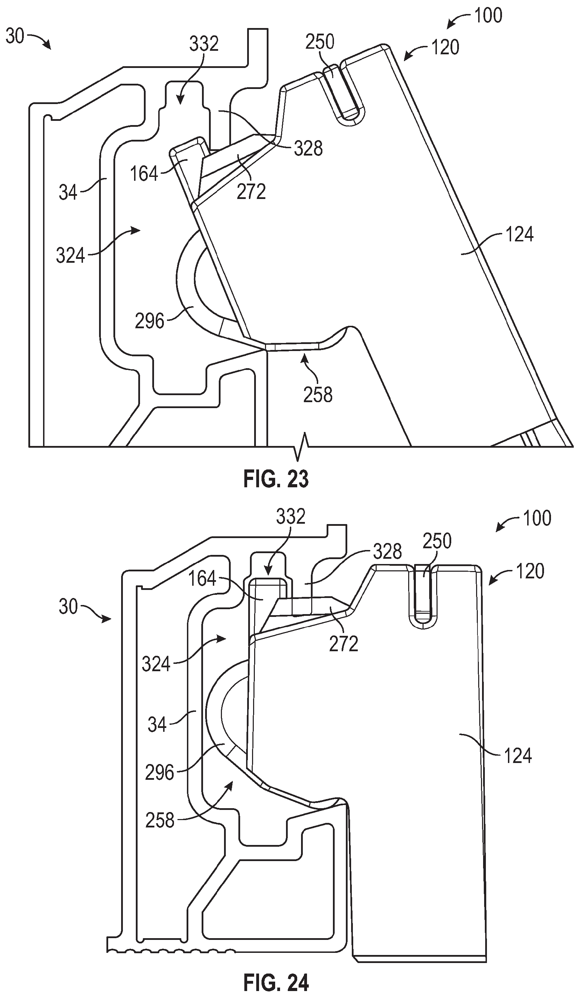

As shown in FIGS. 23 and 24, the solar panel frame 34 of the solar panels 30 includes a slot (e.g., opening), shown as groove 324, configured to receive the first engagement feature 152, the second engagement feature 156, the first engagement member 254, and the second engagement member 258 of the interlock 120. The groove 324 extends along a portion of the solar panel frame 34 to provide a space for the interlock 120 to couple with the solar panels 30. The groove 324 opens (e.g., faces) in a direction away from the solar panel 30 (e.g., not towards an interior of the solar panel 30). As shown in FIGS. 23 and 24, the solar panel frame 34 includes an extension, shown as flange 328, extending vertically downwards and away from a top portion of the solar panel frame 34. The flange 328 extends partially across an opening of the groove 324 to at least partially enclose the groove 324. Near the top of the groove 324 is a recess, shown as protrusion opening 332. The flange 328 defines a lateral edge or side of the protrusion opening 332. In some embodiments, the groove 324 is otherwise shaped or positioned (e.g., such that the groove 324 opens to/faces an interior of the solar panel 30).

As shown in FIG. 23, the interlock 120 is received, at least partially, within the groove 324 of the solar panel frame 34 at an angle relative to the solar panel frame 34. The interlock 120 is positioned such that the second protrusion 164 is received within the protrusion opening 332. To fully install the interlock 120 as shown in FIG. 24, the installer may apply a force to the back panel 132 to push the back panel 132 in a direction towards the solar panel frame 34. The flange 328 provides leverage to (e.g., engages with) the second protrusion 164 as the force is applied to the back panel 132, and the second protrusion 164 is received within the protrusion opening 332 interior to the flange 328. According to an exemplary embodiment, the interlock 120 is installed without the use of external tools (e.g., drills, screw drivers, hammers, saws, fasteners, etc.). In such an embodiment, the first biasing member 292 and the second biasing member 296 may elastically deform to bias the first teeth 268 and the second teeth 272 in a direction generally vertically upwards into an engagement with the solar panel frame 34 of the solar panels 30 when the interlock 120 is installed. The elastic deformation of the first biasing member 292 and the second biasing member 296 may facilitate coupling the bonding strip 250 and the solar panel frame 34 together without use of an external tool and retaining the coupling between the bonding strip 250 and the solar panel frame 34.

As the interlock 120 is installed, the second teeth 272 engage with the flange 328 and pierce (e.g., cut into) the flange 328 such that the second teeth 272 are electrically coupled with the solar panel 30. In some embodiments, the flange 328 includes an anodized surface, and the second teeth 272 pierce the anodized surface. While the second teeth 272 and the flange 328 are shown overlapping in FIG. 24, it should be understood that the second teeth 272 is piercing the flange 328. In some embodiments, the second teeth 272 pierce a smaller fraction of the flange 328 than shown in FIG. 24. According to an exemplary embodiment, the bonding strip 250 includes two second teeth 272 to provide redundant (e.g., a secondary) electrical contact between the bonding strip 250 and the solar panel frame 34 (e.g., to prevent a ground discontinuity in a scenario where one of the second teeth 272 is electrically decoupled from the solar panel frame 34). In such an embodiment, if one of the teeth of the second teeth 272 and/or one of the teeth of the first teeth 268 are not electrically coupled to the solar panels 30, the solar panels 30 may remain electrically coupled through the bonding strip 250 (e.g., via an electrical connection between the solar panels 30 and the other one of the second teeth 272 and/or first teeth 268).

As shown in FIG. 24, when the interlock 120 is installed, the second biasing member 296 contacts the solar panel frame 34 along a bottom surface of the groove 324. The contact between the second biasing member 296 and the solar panel frame 34 provides redundant (e.g., a secondary) electrical contact between the bonding strip 250 and the solar panel frame 34 (e.g., to prevent a ground discontinuity in a scenario where one or both of the second teeth 272 are electrically decoupled from the solar panel frame 34). It should be understood that the process described above (e.g., the installation of the interlock 120, the electrical coupling of the bonding strip 250, etc., with a first solar panel 30) with respect to the second engagement feature 156 and the second engagement member 258 and with reference to FIGS. 23 and 24 may be repeated with the first engagement feature 152 and the first engagement member 254 to install the interlock 120 and electrically couple the bonding strip 250 with a second solar panel 30 adjacent to the first solar panel 30 (e.g., at the same time as the first solar panel 30).

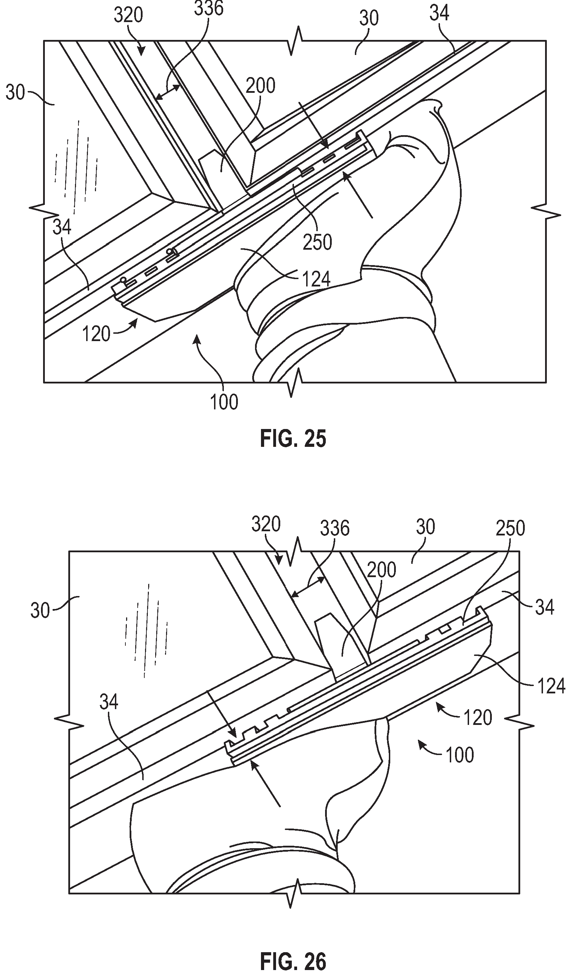

As shown in FIGS. 25 and 26, the interlock 120 is installed according to the installation process described above. The first teeth 268 pierce the solar panel frame 34 of a first solar panel 30, and the second teeth 272 pierce the solar panel frame 34 of a second solar panel 30 adjacent to the first solar panel 30 to electrically couple the solar panels 30 through the bonding strip 250. Collectively, the mounting system 100 provides a continuous electrical connection between the solar panels 30, facilitating multiple solar panels 30 having a common ground connection.

According to an exemplary embodiment, and as shown in FIGS. 25-30, prior to installing the interlock 120 such that the solar panels 30 are electrically coupled through the bonding strip 250, the solar panels 30 are positioned such that the spacer 200 extends within the gap 320 defining a width 336. The interlock 120 is positioned to engage the spacer 200 at a first side thereof with a first one of the solar panels 30, then the second one of the solar panels 30 is brought into engagement with the opposite side of the spacer 200. Specifically, after the spacer 200 is engaged with the first solar panel 30, the second solar panel 30 is moved towards the first solar panel 30 and the spacer 200 until the second solar panel 30 engages with the spacer 200. By positioning the solar panels 30 on opposing sides of the spacer 200, the thickness 212 of the spacer 200 defines the width 336 of the gap 320. With the solar panels 30 spaced apart by the gap 320 defining the width 336, the interlock 120 may be installed as shown and described with reference to FIGS. 23-26.

Beneficially, using the spacer 200 of the interlock 120 to align and position the solar panels 30 helps ensure that each solar panel 30 of the array of solar panels 30 installed on the roof 20 is spaced apart from adjacent solar panels 30 by gaps 320 having substantially the same dimensions (e.g., the same width 336). In some embodiments, the solar panels 30 are aligned and positioned using the back panel indicators 144 and/or the front panel indicators 148 without the spacer 200. In such an example, because the space between the back panel indicators 144 and the space between the front panel indicators 148 is substantially similar to the thickness 212 of the spacer 200, the back panel indicators 144 and/or the front panel indicators 148 provide an indication of where to align and position the solar panels 30 relative to adjacent solar panels 30. In some embodiments, installing the interlock 120 provides audible or tactile feedback indicative of the interlock 120 being fully installed and an electrical coupling being established between adjacent solar panels 30.

According to an exemplary embodiment, the rails 104 include the groove 324, the flange 328, and the protrusion opening 332. Accordingly, the installation process to electrically couple adjacent rails 104 through the bonding strip 250 may be substantially similar to the process described above with respect to the solar panels 30. However, because the rails 104 are not spaced apart from each other (e.g., the gap 320 between rails 104 is not needed), the spacer 200 of the interlock body 124 may be removed prior to installing the interlock 120.

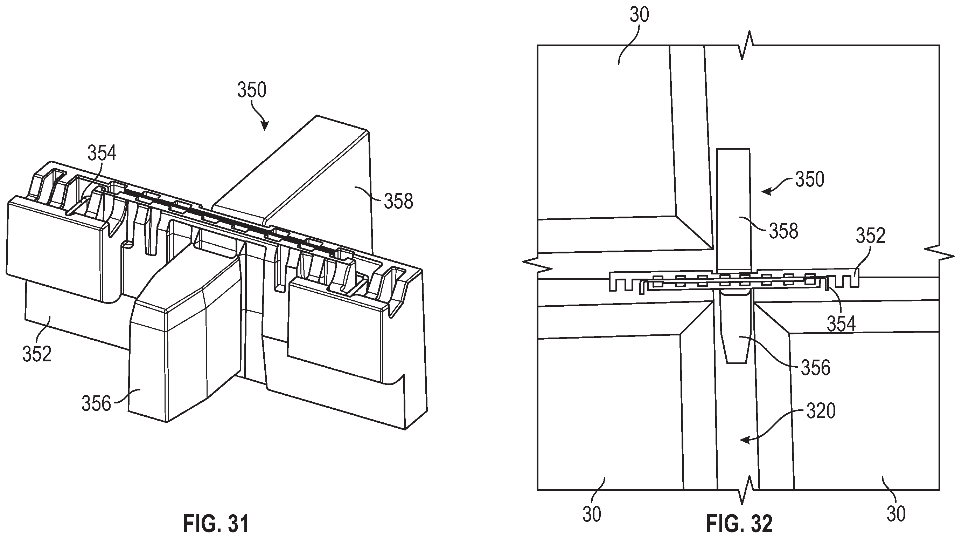

As shown in FIGS. 31 and 32, a mounting interlock (e.g., tool-less interlock, interlock for the rails 104, interlock for the solar panels 30, solar panel spacing aid, etc.), shown as interlock 350, is substantially similar to the interlock 120 except as otherwise shown and described. The interlock 350 includes a first component (e.g., main body, bonding strip support, etc.), shown as interlock body 352, and a second component (e.g., electrical contactor), shown as bonding strip 354, coupled to and supported by the interlock body 352. The interlock body 352 includes a first tab (e.g., spacer block), shown as first spacer 356, coupled to the interlock body 352 at a front side (e.g., a down-roof side) thereof and extending in a first direction away from the interlock body 352. The interlock body 352 includes a second tab (e.g., spacer block), shown as second spacer 358, coupled to the interlock body 352 at a back side (e.g., an up-roof side) thereof and extending in a second direction away (opposite the first direction) from the interlock body 352. According to an exemplary embodiment, the first spacer 356 is configured to be positioned between adjacent solar panels 30 located at the front side of the interlock 350 and the second spacer 358 is configured to be positioned between adjacent solar panels 30 located at the back side of the interlock 350. The first spacer 356 defines a first gap (e.g., the gap 320) between the down-roof solar panels 30 and the second spacer 358 defines a second gap (e.g., the gap 320) between the up-roof solar panels 30. In some embodiments, the first spacer 356 and the second spacer 358 define substantially similar widths such that the first gap and the second gap are substantially similar.

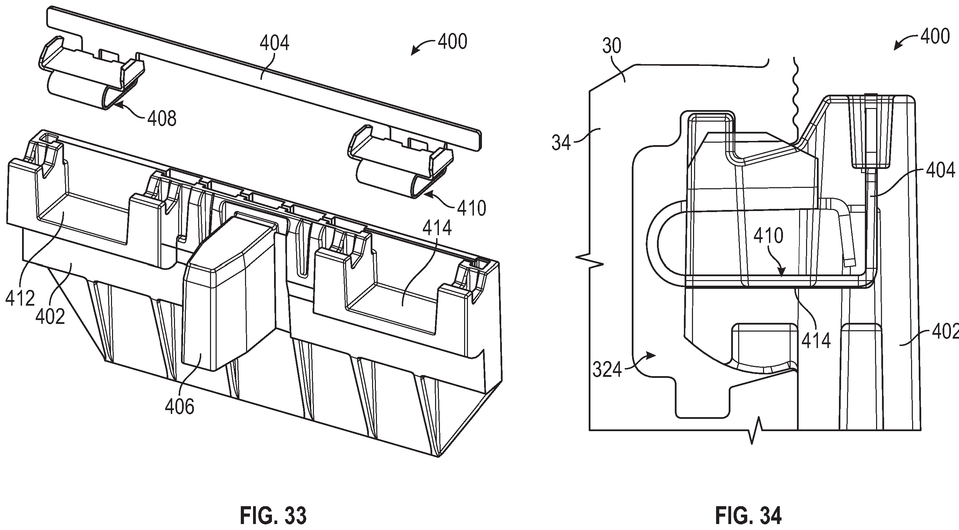

As shown in FIGS. 33 and 34, a mounting interlock (e.g., tool-less interlock, interlock for the rails 104, interlock for the solar panels 30, solar panel spacing aid, etc.), shown as interlock 400, is substantially similar to the interlock 120 except as otherwise shown and described. The interlock 400 includes a first component (e.g., main body, bonding strip support, etc.), shown as interlock body 402, and a second component (e.g., electrical contactor), shown as bonding strip 404, coupled to and supported by the interlock body 402. The interlock body 402 includes a tab (e.g., spacer block), shown as spacer 406, coupled to the interlock body 402 at a front side (e.g., a down-roof side) thereof and extending in a first direction away from the interlock body 402. The spacer 406 may be positioned between adjacent solar panels 30 to define a gap (e.g., the gap 320) therebetween. As shown in FIGS. 33 and 34, the bonding strip 404 includes a first portion, shown as first engagement member 408, and a second portion, shown as second engagement member 410. The interlock body 402 includes a first bonding strip support and frame engagement structure, shown as first engagement feature 412, and a second bonding strip support and frame engagement structure, shown as second engagement feature 414. The bonding strip 404 and the interlock body 402 may be coupled with each other such that the first engagement member 408 is received within and supported by the first engagement feature 412 and the second engagement member 410 is received within and supported by the second engagement feature 414. The first engagement member 408 and the second engagement member 410 define bottom surfaces that are substantially flat (compared to the curved and bending bottom surfaces of the first biasing member 292 and the second biasing member 296 of the bonding strip 250). As shown in FIGS. 33 and 34, the interlock body 402 may omit the first cutout 192 and the second cutout 196 such that the first engagement member 408 and the second engagement member 410 do not engage with the solar panel frame 34 when the interlock 400 is installed.

As utilized herein with respect to numerical ranges, the terms "approximately," "about," "substantially," and similar terms generally mean +/- 10% of the disclosed values. When the terms "approximately," "about," "substantially," and similar terms are applied to a structural feature (e.g., to describe its shape, size, orientation, direction, etc.), these terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the mounting system 100 as shown in the various exemplary embodiments is illustrative only. Additionally, any element disclosed in one embodiment may be incorporated or utilized with any other embodiment disclosed herein.

## Claims

1. A solar panel interlock assembly comprising:
a main body including:
a wall;
a first engagement feature extending away from the wall and configured to engage with a first solar panel; and
a second engagement feature extending away from the wall and configured to engage with a second solar panel; and
a bonding strip supported by the main body, the bonding strip configured to electrically couple with the first solar panel and the second solar panel to electrically couple the first solar panel with the second solar panel,
wherein the solar panel interlock assembly is configured to mechanically and electrically couple with the first solar panel and the second solar panel without use of an external tool.

2. The solar panel interlock assembly of Claim 1, wherein the bonding strip is manufactured from stainless steel.

3. The solar panel interlock assembly of Claim 1 or 2, wherein the main body defines a first support surface supporting a first portion of the bonding strip, a second support surface supporting a second portion of the bonding strip, and a slot to receive a third portion of the bonding strip extending between the first portion and the second portion.

4. The solar panel interlock assembly of one of the preceding claims, wherein the bonding strip includes a first tooth configured to engage with the first solar panel and a second tooth configured to engage with the second solar panel, wherein the first tooth is electrically coupled with the second tooth such that when the first tooth is engaged with the first solar panel and the second tooth is engaged with the second solar panel, the first solar panel is electrically coupled with the second solar panel, preferably wherein the first tooth is configured to pierce a first anodized surface of the first solar panel to engage with the first solar panel and the second tooth is configured to pierce a second anodized surface of the second solar panel to engage with the second solar panel.

5. The solar panel interlock assembly of Claim 4, wherein the bonding strip includes a third tooth configured to engage with the first solar panel and a fourth tooth configured to engage with the second solar panel, wherein the first tooth, the second tooth, the third tooth, and the fourth tooth are electrically coupled with each other such that when (i) at least one of the first tooth or the third tooth is engaged with the first solar panel and (ii) at least one of the second tooth or the fourth tooth is engaged with the second solar panel, the first solar panel is electrically coupled with the second solar panel.

6. The solar panel interlock assembly of claim 4 or 5, wherein the bonding strip includes:
a cross-member;
a first biasing member coupled between the first tooth and the cross-member, wherein the first biasing member is configured to bias the first tooth in a direction towards the first solar panel to facilitate engagement between the first tooth and the first solar panel; and
a second biasing member coupled between the second tooth and the cross-member, wherein the second biasing member is configured to bias the second tooth in a direction towards the second solar panel to facilitate engagement between the second tooth and the second solar panel.

7. The solar panel interlock assembly of Claim 6, wherein the bonding strip includes a first wing extending from a first end of the cross-member and a second wing extending from a second end of the cross-member, and wherein the main body includes a first opening and a second opening configured to receive the first wing and the second wing, respectively, to couple the bonding strip with the main body, and/or wherein the first engagement feature includes a first cutout configured to receive the first biasing member and a second cutout configured to receive the second biasing member.

8. The solar panel interlock assembly of one of the preceding claims, wherein at least a portion of the bonding strip is configured to elastically deform to couple with the first solar panel and the second solar panel, and/or wherein the first engagement feature is configured to be received in a first slot of the first solar panel, and wherein the second engagement feature is configured to be received in a second slot of the second solar panel.

9. The solar panel interlock assembly of one of the preceding claims, wherein the main body includes a spacer extending away from the wall and configured to be positioned between the first solar panel and the second solar panel to define a gap therebetween, preferably wherein the spacer is removable from the main body.

10. The solar panel interlock assembly of Claim 9, wherein the spacer is a first spacer extending in a first direction away from the wall, and wherein the main body includes a second spacer extending in a second direction opposite the first direction away from the wall and configured to be positioned between a third solar panel and a fourth solar panel to define a gap therebetween.

11. The solar panel interlock assembly of one of the preceding claims, wherein the wall provides an indication of a gap to space the first solar panel from the second solar panel.

12. An interlock assembly comprising:
a main body including:
a wall;
a first engagement feature extending away from the wall and configured to couple with a first roofing panel; and
a second engagement feature extending away from the wall and configured to couple with a second roofing panel; and
a bonding strip configured to be supported by the main body, the bonding strip including at least one first tooth configured to engage with the first roofing panel and at least one second tooth configured to engage with the second roofing panel, the at least one first tooth and the at least one second tooth are electrically coupled with each other such that when the at least one first tooth is engaged with the first roofing panel and the at least one second tooth is engaged with the second roofing panel, the first roofing panel is electrically coupled with the second roofing panel,
wherein the main body facilitates engaging the bonding strip with the first roofing panel and the second roofing panel without an external tool.

13. The interlock assembly of Claim 12, wherein the bonding strip includes:
a cross-member;
a first biasing member coupled between the at least one first tooth and the cross-member, wherein the first biasing member is configured to bias the at least one first tooth in a direction towards the first roofing panel to facilitate engagement between the at least one first tooth and the first roofing panel; and
a second biasing member coupled between the at least one second tooth and the cross-member, wherein the second biasing member is configured to bias the at least one second tooth in a direction towards the second roofing panel to facilitate engagement between the at least one second tooth and the second roofing panel,
wherein the main body defines a first support surface supporting the first biasing member, a second support surface supporting the second biasing member, and a slot to receive the cross-member extending between the first biasing member and the second biasing member, and/or Claim 14wherein the bonding strip includes two first teeth and two second teeth.

14. A roofing assembly comprising:
a first roofing panel configured to couple with a roof, the first roofing panel defining a first slot;
a second roofing panel configured to couple with the roof, the second roofing panel defining a second slot; and
an interlock assembly including:
a main body including:
a wall;
a first engagement feature extending from the wall and configured to be received in the first slot to couple to the first roofing panel;
a second engagement feature extending from the wall and configured to be received in the second slot to couple to the second roofing panel; and
a spacer extending from the wall and configured to be positioned between the first roofing panel and the second roofing panel to define a gap therebetween; and
a bonding strip configured to be supported by the main body and electrically couple the first roofing panel with the second roofing panel.

15. The roofing assembly of Claim 14, wherein:
the first roofing panel includes a first anodized surface and the second roofing panel includes a second anodized surface;
the bonding strip includes at least one first tooth configured to engage with the first roofing panel and at least one second tooth configured to engage with the second roofing panel,
the at least one first tooth and the at least one second tooth are electrically coupled with each other; and
the at least one first tooth is configured to pierce the first anodized surface and the at least one second tooth is configured to pierce the second anodized surface to engage with the first roofing panel and the second roofing panel, respectively, and electrically couple the first roofing panel with the second roofing panel.
